Europäisches Patentamt

European Patent Office

Office européen des brevets

(19)

(11) Veröffentlichungsnummer: **0 431 345 B1**

## (12) EUROPÄISCHE PATENTSCHRIFT

(45) Veröffentlichungstag der Patentschrift: **30.03.94**

(21) Anmeldenummer: **90121519.4**

(22) Anmeldetag: **10.11.90**

(51) Int. Cl.5: **G01F 1/46**, G01F 1/36,
G01L 13/06

(54) **Sonde zur Druckmessung eines in einem Rohr strömenden Fluids.**

(30) Priorität: **07.12.89 DE 3940474**

(43) Veröffentlichungstag der Anmeldung:
**12.06.91 Patentblatt  91/24**

(45) Bekanntmachung des Hinweises auf die
Patenterteilung:
**30.03.94 Patentblatt  94/13**

(84) Benannte Vertragsstaaten:
**AT CH DE DK FR LI NL**

(56) Entgegenhaltungen:
**EP-A- 0 049 756**

(73) Patentinhaber: **IWK Regler und Kompensatoren GmbH
Postfach 11 62,
Lorenzstrasse 6
D-76288 Stutensee-Blankenloch(DE)**

(72) Erfinder: **Mall, Horst
Rechts der Alb 19
W-7500 Karlsruhe(DE)**

(74) Vertreter: **Dipl.-Ing. Heinert Lichti Dr. rer. nat
Dipl.-Phys. Jost Lempert Dipl.-Ing. Hartmut
Lasch
Postfach 41 07 60
D-76207 Karlsruhe (DE)**

## Beschreibung

Die Erfindung betrifft eine Sonde zur Druckmessung eines in einem Rohr strömenden Fluids.

Derartige Sonden können bei kompressiblen und nicht-kompressiblen Fluiden, also bei Gasen und Flüssigkeiten, einsetzbar sein. Zur Druckmessung in Flüssigkeiten, zur Bestimmung des Durchflußvolumens durch das die Flüssigkeit führende Rohr sind verschiedene Verfahren und Vorrichtungen bekannt. So kann insbesondere zur Messung einer Gas- und Dampfströmung eine Blende vorgesehen sein, hinter der und vor der durch Öffnungen in der Wandung des das Fluid führenden Rohres der Druck abgegriffen wird. Die Messung ist genau, es entsteht aber ein relativ hoher bleibender Druckverlust. Zur Messung der Strömung einer Flüssigkeit kann ein Venturirohr eingesetzt werden, das einen geringeren, aber beispielsweise in Fernwärmesystemen zu kleinen Meßbereich hat. Eine Düse liegt hinsichtlich des Druckverlustes zwischen Blende und Venturirohr und kann sowohl bei kompressiblen als auch bei inkompressiblen Strömungen eingesetzt werden, jedoch ist auch dabei der effektive Volumenstrommeßbereich für viele Prozesse zu gering. Derartige Wirkdruckmeßgeräte haben darüber hinaus den Nachteil, daß sie gegenüber Ein- und Auslaufströmungen sehr empfindlich sind und Ein- und Auslaufstreckenlängen bis zum Hundertfachen des Durchmessers des das Fluid führenden Rohres haben müssen, also beispielsweise nur in einem solchen Abstand hinter oder vor Krümmern eingesetzt werden können. Sie werden daher stets mit den Ein- und Auslaufstrecken zusammen geeicht.

Weiterhin besteht die Möglichkeit, eine Volumenstrommessung durch Einsatz eines Prandtl-Rohres vorzusehen, das ein hakenförmig gebogenes Rohr mit einer der Strömung entgegengerichteten und einer (mit ihrer Normalen) senkrecht zur Strömung gerichteten Öffnung ist, die mit den Meßeinrichtungen verbunden sind. Ein Pitot-Rohr weist nur eine der Strömung entgegengerichtete Öffnung auf, während die Öffnung für die statische Druckaufnahme in der Wandung des das Fluid führenden Rohres ausgebildet ist.

Es wurde weiterhin vorgeschlagen, Drucksonden durch sich quer zur Achse des das Fluid führenden Rohres erstreckende Rohre mit mehreren, der Strömung entgegengerichteten Aufnahmeöffnungen zur Mittelung des aufgenommenen Druckes vorzusehen, wobei bei großen Nennweiten im Inneren des äußeren Aufnahmerohres eine weitere rohrförmige Integrationssonde mit einer Öffnung vorgesehen ist. Es kann weiterhin am gleichen Rohr eine der Strömung abgewandte Öffnung zur Aufnahme des statischen Drucks vorgesehen sein, um den dynamischen Druck durch Differenzdruckmessung aus Gesamtdruck und statischem Druck zu bestimmen. Nach der EP-A-49 756 ist statt dessen zusätzlich stromab der Sonde zur Aufnahme des Gesamtdruckes eine Sonde mit stromab gewandten, kreislochförmigen Öffnungen für den statischen Druck angeordnet.

Bei derartigen Sonden mit mehreren Aufnahmeöffnungen besteht die große Gefahr, daß vom Strömungsmedium mitgeführte Verunreinigungen durch Querströmungen in der Sonde sich ablagern und das Meßergebnis verfälschen, insbesondere Magnetitablagerungen bei Heizungsanlagen, so daß der Meßfehler sich über Jahre hinweg verändert und insbesondere vergrößert. In nicht seltenen Fällen kann es dadurch auch zu Verstopfungen innerhalb der Sonde(n) führen, die den Ausfall der Messung mit sich bringt. Darüber hinaus ist der Meßfehler temperaturabhängig und kann insbesondere bei hohen Temperaturen und hohen Geschwindigkeiten erheblich ansteigen. Der Erfindung liegt daher die Aufgabe zugrunde, eine Meßsonde der eingangs genannten Art zu entwickeln, die über viele Jahre hin einen gleichbleibend geringen Meßfehler bei großen Temperatur- und Strömungsgeschwindigkeitsschwankungen sicherstellt und Verstopfungen durch Querströmungen vermeidet.

Erfindungsgemäß wird die genannte Aufgabe gelöst durch eine Sonde zur Druckmessung eines in einem Rohr strömenden Fluids, in Form mindestens eines sich quer zur Strömungsrichtung des Fluids erstreckenden Aufnahmerohres mit einer einzigen Druckaufnahmeöffnung, deren Normale parallel zur Strömungsrichtung gerichtet ist, und mit einer Auslaßöffnung, über die der Druck an einem Druckmesser ansteht, wobei die Druckaufnahmeöffnung ein sich über den größten Teil des Aufnahmerohres in dessen Längsrichtung erstreckender Schlitz ist.

Durch die Ausgestaltung des Aufnahmerohres der Sonde mit einer einzigen schlitzförmigen Öffnung definierter Länge werden Querströmungen, wie sie bei mehreren Öffnungen auftreten und die zu Ablagerungen von vom Strömungsmedium mitgeführten Verunreinigungen, insbesondere Magnetitablagerungen bei Heizungsanlagen, führen, ausgeschlossen. Es hat sich darüber hinaus überraschenderweise gezeigt, daß auch durch eine einzige schlitzförmige Aufnahmeöffnung eine Mittelung der Strömungsdrücke in hinreichend genauer Weise erreicht werden kann. So wurde über einen Temperaturbereich von Wasser zwischen 20 und 180 °C eine Fehlergenauigkeit von +/- 1 % in einem Meßbereich von minimaler zu maximaler Volumenströmung von 1:30 erzielt.

Gemäß bevorzugter Ausgestaltung ist vorgesehen, daß die Aufnahmeöffnung symmetrisch zur Mittelachse des die Strömung führenden Rohres angeordnet ist und daß die Aufnahmeöffnung eine Länge von etwa 0,76 des lichten Durchmessers des die Strömung führenden Rohres hat, wobei insbesondere die Aufnahmeöffnung jeweils in einem Abstand von 0,119 des lichten Durchmessers des vom Fluid durchströmten Rohres von der Innenwandung desselben beginnt. Bei der Anordnung, Ausbildung und Erstreckung des Schlitzes in dieser Weise haben sich die höchsten Genauigkeiten der erfindungsgemäß mit einem einzigen Schlitz in einem Aufnahmerohr ausgebildeten Meßsonde ergeben. Insbesondere ist die erfindungsgemäße Sonde von Vor- und Nachlaufstrecken weitgehend unabhängig.

Wenn neben der Gesamtdruckaufnahme auch zur Differenzdruckmessung der Sogdruck aufgenommen werden soll, so ist bevorzugt vorgesehen, daß das Aufnahmerohr mehrkantig ausgebildet ist, wobei weiterhin das Aufnahmerohr im Querschnitt quadratisch ausgebildet ist und die von der Aufnahmeöffnung durchbrochene Kante sowie eine dieser diagonal gegenüberliegenden Kante des Aufnahmerohres in einer gemeinsamen Diagonalebene des das Fluid führenden Rohres liegen.

In diesem Falle ist die Sonde derart ausgebildet, daß ein Aufnahmerohr mit einem der Strömung entgegengerichteten Schlitz und mit Abstand in Strömungsrichtung zu diesem ein Aufnahmerohr mit einem der Strömung abgewandten oder dieser parallel genannten, ebenfalls schlitzförmigen Aufnahmeöffnung vorgesehen ist. Um die Beeinflussung des ersten Aufnahmerohres auf das den statischen Druck aufnehmende Aufnahmerohr möglichst gering zu halten sieht eine weitere bevorzugte Ausgestaltung vor, daß die Aufnahmerohre gekreuzt zueinander angeordnet sind. Darüberhinaus ist vorgesehen, daß die beiden Aufnahmerohre einen Abstand von mehr als dem Zweifachen ihrer größten Querabmessung aufweisen.

Insgesamt wird durch die Erfindung eine Sonde zur Druckmessung in einem strömenden Fluid geschaffen, die unempfindlich gegenüber Verunreinigungen, die vom Strömungsmedium mitgeführt werden können, insbesondere gegenüber Magnetitablagerungen bei Heizungsanlagen, ist und daher einen gleichbleibend geringen Meßfehler für viele Jahre sicherstellt. Die Sonde gewährleistet einen großen Meßbereich hinsichtlich Anwendungstemperatur und Druckbzw. Strömungsgeschwindigkeit mit einem äußerst geringen Meßfehler, der, wie gesagt, im übrigen über viele Jahre hinweg innerhalb vorgegebener enger Toleranzen gehalten werden kann. Die Sonde ist verschleiß- und wartungsfrei und weist nur einen geringen Druckverlust auf.

Weitere Vorteile und Merkmale der Erfindung ergeben sich aus den Ansprüchen und aus der nachfolgenden Beschreibung, in der ein bevorzugtes Ausführungsbeispiel der erfindungsgemäßen Sonde unter Bezugnahme auf die Zeichnung im einzelnen erläutert ist. Dabei zeigt:

Figur 1   ein von einem Fluid durchströmtes Rohr mit der erfindungsgemäßen Sonde im Axialschnitt; und

Figur 2   einen zu der Darstellung der Figur 1 senkrechten Schnitt entsprechend II-II der Figur 1.

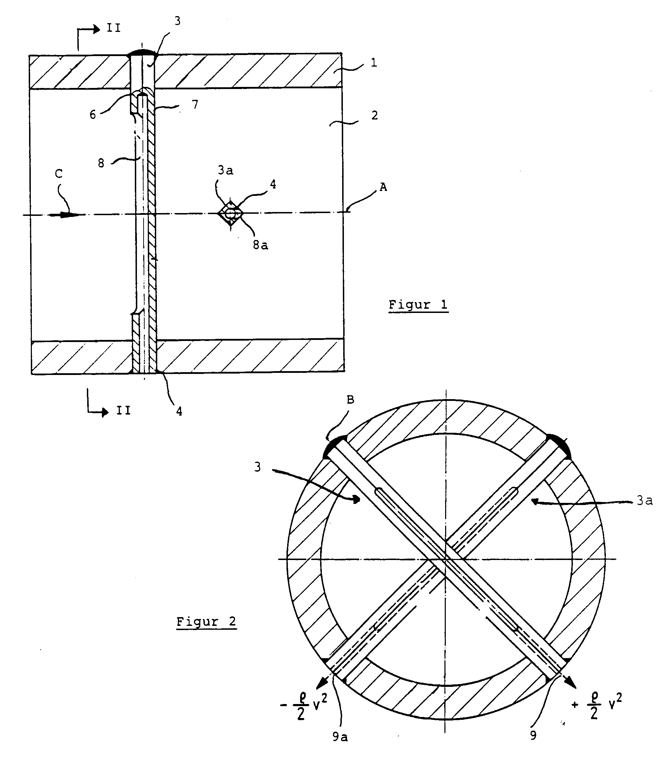

Die Figur 1 zeigt ein Rohr 1, in dessen Innerem 2 ein kompressibles oder inkompressibles Fluid in einer Strömungsrichtung parallel zur Achse A turbulent strömt.

Diagonal, also entlang einer Diagonalen B und quer zur Achse A des Rohres 1 erstrecken sich die Aufnahmerohre 3 und 3a, - Staudrucksonde 3, Sogdrucksonde 3a - die im dargestellten bevorzugten Ausführungsbeispiel Vierkantrohre mit quadratischem Querschnitt sind, die im Inneren einen kreisförmigen Hohlraum 4 aufweisen. Die Aufnahmerohre 3 und 3a weisen einen Relativabstand auf, der ein Vielfaches der Stärke der Aufnahmerohre ist. Das Aufnahmerohr 3 ist derart im Strömungsrohr 1 angeordnet, daß eine vordere Längskante 6 des Aufnahmerohrs 3 der Strömung (Strömungsrichtung: Pfeil C) entgegengerichtet ist und liegt gemeinsam mit der ihr abgewandten , diagonal gegenüberliegenden Kante 7 in einer Diagonalebene des Rohres 1. Entsprechendes gilt für das Aufnahmerohr 3a, das unter einem Winkel von vorzugsweise 90° zum Aufnahmerohr 3 ausgerichtet ist.

Die Aufnahmerohre weisen weiterhin der Strömung zugekehrte und abgewandte Aufnahmeöffnungen 8 und 8a auf, die als sich weitgehend über die Länge der Aufnahmerohre 3 und 3a erstreckende Schlitze ausgebildet sind. Insbesondere beginnen die Schlitze 8 und 8a von jeder Seitenwandung des Durchflußrohres 1 in einem Abstand von 0,119 des Innendurchmessers des Durchflußrohres 1.

Der am Aufnahmerohr 3 anstehende Druck beträgt $p_{stat} + \frac{\varrho}{2} v^2$ , wobei der letzte Term der Staudruck ist, während der Druck am Aufnahmerohr 3a $p_{stat} - \frac{\varrho}{2} v^2$ beträgt, wobei der letzte Term als Sogdruck bezeichnet wird. Die Drücke stehen über Auslaßöffnungen 9, 9a der Aufnahmerohre 3,3a an einem Druckmesser, wie vorzugsweise einem piezo-resistiven Differenzdruckwandler an, an dem sich demgemäß ein Meßsignal $\frac{\varrho}{2} v^2$ ergibt, das dem Doppelten des dynamischen oder Strömungsdrucks der Flüssigkeit entspricht.

Mit der erfindungsgemäßen Sonde wird eine Sonde geschaffen, bei der Verschmutzungen und Ablagerungen in der Sonde durch Querströmungen ausgeschlossen werden, die eine hohe Meßgenauigkeit von unter +/-1 % in einem großen Geschwindigkeitsbereich und hohem Temperaturbereich des Fluids gewährleistet, so daß ein hoher Meßbereich erreicht werden kann. Weiterhin ist die erfindungsgemäße Sonde schon bei sehr geringen Strömungsgeschwindigkeiten,wie in der bevorzugten Ausgestaltung ab 0,23 m/s einsetzbar und kann im übrigen durch die dargestellte symmetrische Ausgestaltung insbesondere unabhängig von der Strömungsrichtung betrieben werden.

**Patentansprüche**

1. Sonde zur Druckmessung eines in einem Rohr (1) strömenden Fluids, in Form mindestens eines sich quer zur Strömungsrichtung des Fluids erstreckenden Aufnahmerohres (3, 3a) mit einer einzigen Druckaufnahmeöffnung (8, 8a), deren Normale parallel zur Strömungsrichtung gerichtet ist, und mit einer Auslaßöffnung (9, 9a), über die der Druck an einem Druckmesser ansteht, wobei die Druckaufnahmeöffnung (8, 8a) ein sich über den größten Teil des Aufnahmerohres (3, 3a) in dessen Längsrichtung erstreckender Schlitz ist.

2. Sonde nach Anspruch 1, dadurch gekennzeichnet, daß die Aufnahmeöffnung (8,8a) symmetrisch zur Mittelachse des die Strömung führenden Rohres (1) angeordnet ist.

3. Sonde nach Anspruch 1 oder 2, dadurch gekennzeichnet, daß die Aufnahmeöffnung (8,8a) eine Länge von etwa 0,76 des lichten Durchmessers des die Strömung führenden Rohres (1) hat.

4. Sonde nach einem der Ansprüche 1 bis 3, dadurch gekennzeichnet, daß die Aufnahmeöffnung (8,8a) jeweils in einem Abstand von 0,119 des lichten Durchmessers des vom Fluid durchströmten Rohres von der Innenwandung desselben beginnt.

5. Sonde nach einem der vorangehenden Ansprüche, dadurch gekennzeichnet, daß das Aufnahmerohr (8,8a) mehrkantig ausgebildet ist.

6. Sonde nach Anspruch 5, dadurch gekennzeichnet, daß das Aufnahmerohr (8,8a) im Querschnitt quadratisch ausgebildet ist.

7. Sonde nach einem der vorangehenden Ansprüche, dadurch gekennzeichnet, daß die von der Aufnahmeöffnung (8,8a) durchbrochene Kante (6) sowie eine dieser diagonal gegenüberliegende Kante (7) des Aufnahmerohres (3,3a) in einer gemeinsamen Diagonalebene des das Fluid führenden Rohres (1) liegen.

8. Sonde mit zwei Aufnahmerohren (3,3a) in der Ausgestaltung nach einem oder mehreren der Ansprüche 1 bis 7, wobei die Aufnahmeöffnung (8) des einen Aufnahmerohres (3) der Strömungsrichtung (C) der Strömung entgegengerichtet und die Aufnahmeöffnung (8a) des anderen Aufnahmerohres (3a) der Strömungsrichtung abgewandt ausgerichtet ist.

9. Sonde nach Anspruch 8, dadurch gekennzeichnet, daß die Aufnahmerohre (3,3a) gekreuzt zueinander angeordnet sind.

10. Sonde nach Anspruch 8 oder 9, dadurch gekennzeichnet, daß die beiden Aufnahmerohre (3,3a) einen Abstand von mehr als dem Zweifachen ihrer größten Querabmessung aufweisen.

**Claims**

1. Probe for measuring the pressure of a fluid flowing in a pipe (1), in the form of at least one reception pipe (3,3a) extending transversely to the fluid flow direction and having a single pressure reception opening (8,8a), whose normal line is directed parallel to the flow direction, and with an outlet port (9,9a) by means of which the pressure is applied to a pressure gauge, the pressure reception opening (8,8a) being a slit extending over most of the reception pipe (3,3a) in the longitudinal direction thereof.

2. Probe according to claim 1, characterized in that the reception opening (8,8a) is positioned symmetrically to the centre axis of the pipe (1) carrying the flow.

3. Probe according to claim 1 or 2, characterized in that the reception opening (8,8a) has a length of approximately 0.76 of the internal diameter of the pipe (1) carrying the flow.

4. Probe according to one of the claims 1 to 3, characterized in that the reception opening (8,8a) in each case starts at a distance of 0.119 of the internal diameter of the inner wall of the pipe through which the fluid flows.

5. Probe according to one of the preceding claims, characterized in that the reception pipe (8,8a) is polygonal.

6. Probe according to claim 5, characterized in that the reception pipe (8,8a) is cross-sectionally square.

7. Probe according to one of the preceding claims, characterized in that the edge (6) interrupted by the reception opening (8,8a) and an edge (7) of the reception pipe (3,3a) diagonally facing the same are located in a common diagonal plane of the pipe (1) carrying the fluid.

8. Probe with two reception pipes (3,3a) in the construction according to one or more of the claims 1 to 7, the reception opening (8) of one reception pipe (3) being directed in opposition to the flow direction (C) of the flow and the reception opening (8a) of the other reception pipe (3a) is oriented remote from the flow direction.

9. Probe according to claim 8, characterized in that the reception pipes (3,3a) cross one another.

10. Probe according to claim 8 or 9, characterized in that the two reception pipes (3,3a) have a spacing of more than twice their largest transverse dimension.

## Revendications

1. Sonde pour mesurer la pression d'un fluide en débit dans un tuyau (1), sous la forme d'au moins un tuyau d'admission (3, 3a) s'étendant transversalement par rapport à la direction d'écoulement du fluide présentant une seule ouverture d'admission de la pression (8, 8a), dont la direction normale est dirigée parallèlement à la direction d'écoulement, et une ouverture de sortie (9, 9a), à travers laquelle la pression communique avec un appareil de mesure de la pression, l'ouverture d'admission de la pression (8, 8a) étant une fente s'étendant sur la majeure partie du tuyau d'admission (3, 3a) dans le sens de la longueur de celui-ci.

2. Sonde selon la revendication 1, caractérisée en ce que l'ouverture d'admission (8, 8a) est disposée symétriquement par rapport à l'axe médian du tuyau (1) de transport du flux.

3. Sonde selon l'une quelconque des revendications 1 ou 2, caractérisée en ce que l'ouverture d'admission (8, 8a) présente une longueur correspondant environ à 0,76 du diamètre intérieur du tuyau (1) de transport du flux.

4. Sonde selon l'une quelconque des revendications 1 à 3, caractérisée en ce que l'ouverture d'admission (8, 8a) commence respectivement à un intervalle de 0,119 du diamètre intérieur du tuyau au travers duquel circule le fluide par rapport à la paroi interne de ce tuyau.

5. Sonde selon l'une quelconque des revendications précédentes, caractérisée en ce que le tuyau d'admission (8, 8a) est polygonal.

6. Sonde selon la revendication 5, caractérisée en ce que le tuyau d'admission (8, 8a) présente une coupe transversale carrée.

7. Sonde selon l'une quelconque des revendications précédentes, caractérisée en ce que le côté (6) traversé par l'ouverture d'admission (8, 8a) ainsi qu'un côté (7) du tuyau d'admission (3, 3a) lui étant diagonalement opposé sont situés dans un plan diagonal commun du tuyau (1) transportant le fluide.

8. Sonde comprenant deux tuyaux d'admission (3, 3a) dans la réalisation selon l'une ou plusieurs des revendications 1 à 7, dans laquelle l'ouverture d'admission (8) de l'un des tuyaux d'admission (3) fait face à la direction d'écoulement (C) du flux, et l'ouverture d'admission (8a) de l'autre tuyau d'admission (3a) est située en direction opposée de la direction d'écoulement.

9. Sonde selon la revendication 8, caractérisée en ce que les tuyaux d'admission (3, 3a) sont disposés de manière à se croiser.

10. Sonde selon l'une quelconque des revendications 8 ou 9, caractérisée en ce que les deux tuyaux d'admission (3, 3a) présentent un écartement supérieur à deux fois leur plus grande dimension transversale.

Figur 1

Figur 2

$$-\frac{\varrho}{2}v^2 \qquad +\frac{\varrho}{2}v^2$$